# EUROPEAN PATENT SPECIFICATION

(11) **EP 1 788 856 B1**
(45) Date of publication and mention of the grant of the patent: **27.03.2013**
(21) Application number: 05790734.7
(22) Date of filing: 09.09.2005
(51) Int. Cl.: A01B 23/02, A01B 35/24, A01C 5/06

(54) **IMPROVED COULTER AND COULTER MOUNTING**
VERBESSERTES PFLUGMESSER UND PFLUGMESSERANBRINGUNG
COUTRE AMELIORE ET SON ELEMENT DE MONTAGE

(30) Priority: 09.09.2004 NZ 53521904
(43) Date of publication of application: 30.05.2007
(73) Proprietor: Tomorrow's Innovations Limited, Sheffield (NZ)
(72) Inventor: TAEGE, Brian, Stewart, Avonhead, Christchurch 8004 (NZ); TAEGE, Keith, Rodney, Sheffield 8173 (NZ); WOODS, William, Edward, Springfield 8170 (NZ)
(74) Representative: Thacker, Darran Ainsley
(86) International application number: PCT/NZ2005/000233
(87) International publication number: WO 2006/028392

(56) References cited:
- EP-A1- 0 769 241
- DD-A1- 261 946
- DE-A1- 3 409 033
- DE-A1- 4 039 966
- GB-A- 2 069 302
- US-A- 2 806 336
- US-A- 3 209 841
- US-A- 3 896 883
- US-A- 4 423 787
- US-A- 4 534 418

## Description

### Technical Field

The present invention relates to an improved coulter mounting and to an improved coulter design.

As used herein, the term "coulter" means the combination of a tip which is adapted to penetrate into the ground when it is drawn across the ground and the associated component or components supporting that tip.

The term "coulter mounting" refers to the means by which the coulter is connected to a support, e.g. to a mounting bar.

### Background Art

A wide variety of different designs of coulters and coulter mountings are known, but existing designs have a range of drawbacks:- resiliently mounted coulters can deflect out of the way if they encounter of stones or other large obstacles, but tend to follow the ground contours rather poorly; rigidly mounted coulters can be damaged if they encounter large obstacles. GB 2 069 307 A discloses a coulter mounting according to the preamble of claim 1.

### Disclosure of the invention

An object of the present invention is the provision of a resilient coulter mounting which nevertheless follows the ground contours effectively and which is inexpensive to manufacture and to repair.

The present invention provides the combination of a coulter mounting and a coulter, the coulter mounting including an S-tyne spring, one end of which is securable to the coulter and the other end of which is securable to a support such that the angle between said other end of the spring and the horizontal is 36° ± 7°; and the coulter including a coulter tip having a width not greater than twelve millimetres.

Preferably, the leading edge of the coulter tip is inclined away from the vertical in the direction of motion of the coulter in use by an angle of 8° ± 4°.

As used herein, the term "S-tyne spring" means a spring which is roughly S-shaped in side view; many different variants of this type of tyne are known and are widely used in agricultural equipment. An S-tyne spring may be made in one or several pieces and may have provision for mounting a coulter or may have a coulter formed integrally with the spring.

The combination of the present invention is especially suited for use with a direct drill, since it opens hard ground very effectively. However, it will be appreciated that the combination of the present invention could also be used with other types of agricultural equipment.

In a preferred embodiment, the present invention provides the combination of a coulter mounting as described above and a coulter which includes a housing supporting a coulter tip and providing at least two dispensing tubes.

### Brief description of the drawings

By way of example only, preferred embodiments of the present invention is described in detail, with reference to the accompanying drawings in which:-
Figure 1 is a side view of a first embodiment of the coulter and coulter mounting of the present invention;
Figure 2 is a side view of the coulter of Figure 1, with the coulter housing split open; and
Figure 3 is a side view of a second embodiment of the coulter and coulter mounting.

### Best mode for carrying out the invention

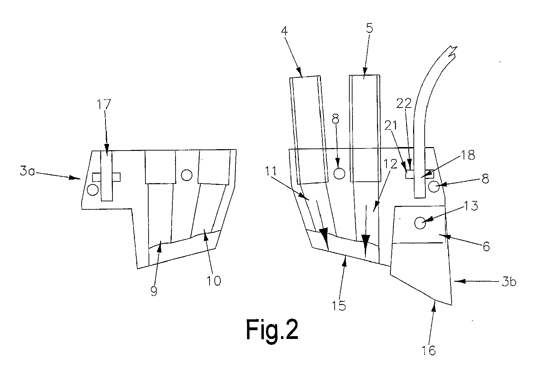

Referring to the drawings, a coulter 2 comprises a housing 3 which receives two dispensing tubes 4,5 and supports a tip 6 of known type. As shown in Figure 2, the housing 3 is formed in two sections, split along a vertical plane. The two parts of the housing 3,3a and 3b, are secured together by a pair of bolts 7 which pass through the apertures 8. This type of construction means that the housing can readily be disassembled for repair/maintenance, and the housing is cheap to manufacture, since both parts of the housing can be manufactured as a simple casting (e.g. in spheroidal graphite cast iron).

The first part of the housing, 3a, provides two part-circular grooves 9,10, the upper parts of which receive the delivery tubes 4,5 and the lower parts of which form part of the chutes for delivery of the seed/fertilizer. One side of the part 3a is cut away to accommodate the top of the replaceable tip 6, which is made of any suitable hardened material e.g. tungsten. The tip 6 has a width not greater than 12 millimetres, preferably about 6 millimetres. The harder the ground, the narrower the tip 6 needs to be for good ground penetration.

The second part of the housing, 3b, provides two complimentary part-circular grooves 11,12 and also provides a mounting for the tip 6 formed with a hole 13 for the mounting bolt 14.

The housing 3 is roughly rectangular in side view, but with the lower edge 15 cut away so as to be well clear of the lower edge 16 of the tip 6. Both parts of the housing 3 also provide a groove 17 to receive the end 18 of the S-tyne mounting spring 20. The end 18 of the spring is secured in the housing by means of a cross pin 21 which lies in a groove 22 formed in the housing; the pin 21 passes through a hole formed through the end 18 of the spring.

When the two parts 3a,3b, of the housing 3 clamped together by the bolts 7, the delivery tubes 4, 5 and the end 18 of the spring 20 are firmly secured in place. It will be noted that the tip 6 (which in some soils will require relatively frequent replacement because of abrasive wear) can be accessed for replacement without opening the housing.

Preferably, the leading edge 6a of the tip 6 is inclined away from the vertical in the direction of motion (Arrow A) by approximately 8° ± 4°: - this assists with the tip penetration of the ground.

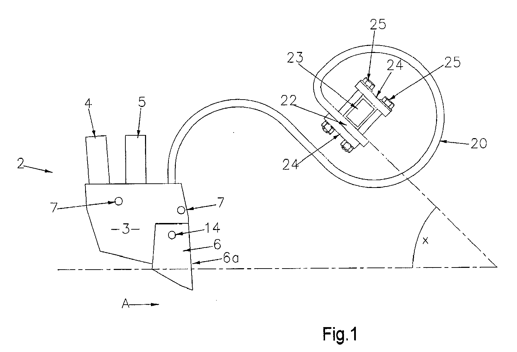

In use, a series of the above described coulters are mounted on the crossbar of a seed drill, equally distantly spaced along the length of the crossbar. Each coulter is mounted from the crossbar by an S-tyne spring 20 of known type, which provides a strong but resilient mounting for the coulter. It has been found that it is particularly advantageous to secure each a S-tyne spring to the crossbar such that the adjacent end 22 of the spring is at an angle x to the horizontal of 36° ± 7°: - this mounting angle has been found to stabilise the coulter in use and to give an optimum angle of attack of the tip 6 to the ground. The end of each spring 20 is mounted on the crossbar 23 (shown in Figure 1 in broken lines) using a pair of parallel mounting plates 24 secured together by a set of four bolts 25, in known manner.

The delivery tubes 4,5 are connected to supplies of seed and fertilizer respectively, by means of flexible tubing, in known manner. More than two tubes can be provided for if required.

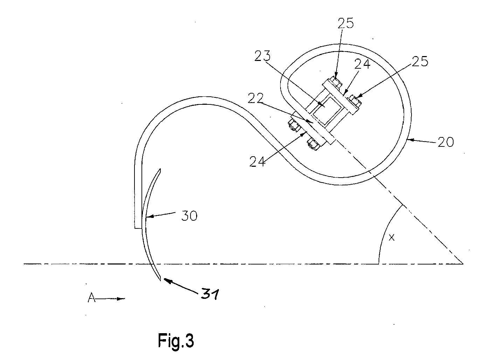

Referring to figure 3, in the second embodiment of the present invention, the coulter 2 of figures 1 and 2 is replaced by a coulter tip 30 of known type, which is mounted directly on the end of the S-tyne spring 20. The spring 20 is mounted as described with reference to figures 1 and 2. The tip 30 has a width not greater than six millimetres, and the leading edge 31 of the tip is inclined away from the vertical in the direction of motion (Arrow A) by approximately 8° ± 4°, to assist ground penetration.

The tip 30 is bolted directly on to the lower end of the spring 20, in known manner.

The above described coulters and coulter mounting have been found extremely effective in efficiently penetrating into hard or compacted ground:- the combination of the narrow tip of the coulter and the mounting angle of the spring gives excellent ground penetration and minimizes spring breakage. This means that it often is possible to use a lower powered tractor to tow the drill or other equipment, with resultant savings in fuel.

## Claims

1. The combination of a coulter mounting and a coulter (2), the coulter mounting including an S-tyne spring (20), one end of which is securable to the coulter (2) and the other end of which is securable to a support (23), **characterised in that** the angle between said other end of the spring and the horizontal is 36° ± 7°; and the coulter (2) including a coulter tip (6,30) having a width not greater than 12 millimetres.

2. The combination as claimed in claim 1, wherein the leading edge (6a,31) of the coulter tip (6,30) is inclined away from the vertical in the direction of motion of the coulter (2) in use by an angle of 8° ± 4°.

3. The combination as claimed in claim 1 or claim 2, wherein the coulter (2) also includes a housing (3) upon which the coulter tip (6) is mounted, said housing providing at least two dispensing tubes (4,5).

4. The combination as claimed in claim 3, wherein said housing (3) is formed in two complimentary halves (3a,3b) which are separable along a vertical plane.

5. The combination as claimed in claim 4, wherein the coulter tip (6) is mounted upon the housing (3) such that the coulter tip (6) can be removed and replaced without separating said housing into said halves.

6. The combination as claimed in any one of the preceding claims, wherein the coulter tip (6,30) has a width not greater than 6 millimetres.

7. The combination as claimed in claim 1 or 2, wherein said S-tyne spring (20) is made in one piece.

8. The combination as claimed in claim 1 or 2, wherein said S-tyne spring (20) is made in two pieces.

9. The combination as claimed in claim 1 or 2, wherein said coulter (2) is formed integrally with said S-tyne spring (20).

## Patentansprüche

1. Kombination einer Pflugbefestigung und eines Pflugs (2), wobei die Pflugbefestigung eine S-Zinken-Feder (20) aufweist, deren eines Ende verriegelbar an den Pflug (2) und deren anderes Ende verriegelbar an einem Träger (23) befestigbar ist, **dadurch gekennzeichnet, dass** der Winkel zwischen dem anderen Ende der Feder und der Horizontale bei 36° ± 7° liegt, und dass der Pflug (2) eine Pflugspitze (6, 30) aufweist, welche eine Breite hat, die nicht größer als 12 mm beträgt.

2. Kombination nach Anspruch 1, bei welcher die Führungskante (6a, 31) der Pflugspitze (6, 30) von der Vertikalen in Richtung der Bewegung des Pflugs (2) beim Einsatz um einen Winkel von 8° ± 4° abgewinkelt ist.

3. Kombination nach Anspruch 1 oder Anspruch 2, bei welcher der Pflug (2) auch ein Gehäuse (3) aufweist, auf welchem die Pflugspitze (6) moniert ist, wobei das Gehäuse wenigstens zwei Abgaberohre (4, 5) aufweist.

4. Kombination nach Anspruch 3, bei welcher das Gehäuse (3) in zwei komplimentären Hälften (3a, 3b) gebildet ist, welche entlang einer vertikalen Ebene trennbar sind.

5. Kombination nach Anspruch 4, bei welcher die Pflugspitze (6) auf dem Gehäuse (3) derart montiert ist, dass die Pflugspitze (6) entfernt und ersetzt werden kann, ohne dass das Gehäuse in die genannten Hälften getrennt wird.

6. Kombination nach einem der vorhergehenden Ansprüche, bei welcher die Pflugspitze (6, 30) eine Breite hat, welche nicht mehr als 6 mm beträgt.

7. Kombination nach Anspruch 1 oder 2, bei welcher die S-Zinken-Feder (20) aus einem Stück hergestellt ist.

8. Kombination nach Anspruch 1 oder 2, bei welcher die S-Zinken-Feder (20) in zwei Teilen hergestellt ist.

9. Kombination nach Anspruch 1 oder 2, bei welcher der Pflug (2) mit der S-Zinken-Feder (20) einstückig geformt ist.

## Revendications

1. Combinaison composée d'un élément de montage de coutre et d'un coutre (2), l'élément de montage de coutre comprenant un ressort à dent en S (20), dont une extrémité peut être fixée au coutre (2) et dont l'autre extrémité peut être fixée à un support (23), **caractérisée en ce que** l'angle entre ladite autre extrémité du ressort et l'horizontale est de 36° ± 7° ; et le coutre (2) comprenant une pointe de coutre (6, 30) ayant une largeur non supérieure à 12 millimètres.

2. Combinaison selon la revendication 1, dans laquelle le bord d'attaque (6a, 31) de la pointe de coutre (6, 30) est incliné à distance de la verticale dans la direction de mouvement du coutre (2) lorsqu'il est utilisé, selon un angle de 8° ± 4°.

3. Combinaison selon la revendication 1 ou la revendication 2, dans laquelle le coutre (2) comprend également un boîtier (3) sur lequel la pointe de coutre (6) est montée, ledit boîtier fournissant au moins deux tubes de distribution (4, 5).

4. Combinaison selon la revendication 3, dans laquelle ledit boîtier (3) est formé en deux moitiés complémentaires (3a, 3b) qui sont séparables le long d'un plan vertical.

5. Combinaison selon la revendication 4, dans laquelle la pointe de coutre (6) est montée sur le boîtier (3) de sorte que la pointe de coutre (6) peut être retirée et remplacée sans séparer ledit boîtier en lesdites moitiés.

6. Combinaison selon l'une quelconque des revendications précédentes, dans laquelle la pointe de coutre (6, 30) a une largeur non supérieure à 6 millimètres.

7. Combinaison selon la revendication 1 ou 2, dans laquelle ledit ressort à dent en S (20) est réalisé d'un seul tenant.

8. Combinaison selon la revendication 1 ou 2, dans laquelle ledit ressort à dent en S (20) est réalisé en deux pièces.

9. Combinaison selon la revendication 1 ou 2, dans laquelle ledit coutre (2) est formé de manière solidaire avec ledit ressort à dent en S (20).
